# EUROPÄISCHE PATENTANMELDUNG

(11) **EP 2 154 376 A2**
(43) Veröffentlichungstag der Anmeldung: **17.02.2010**
(21) Anmeldenummer: 09010292.2
(22) Anmeldetag: 10.08.2009
(51) Int. Cl.: F04D 13/06, F04D 29/66

(54) **Geräuschminimierung von elektromotorisch betriebenen Pumpen**

(30) Priorität: 12.08.2008 DE 102008038661
(71) Anmelder: WILO SE, 44263 Dortmund (DE)
(72) Erfinder: Materne, Thomas, 59348 Lüdinghausen (DE)
(74) Vertreter: COHAUSZ DAWIDOWICZ HANNIG & SOZIEN

(57) **Zusammenfassung**

Die Erfindung betrifft ein Verfahren zur Reduzierung der Geräuschemission eines Pumpenaggregats mit einer Pumpe und einem diese antreibenden Elektromotor (1) mit einzeln bestrombaren Statorspulen (2, 22, 23) umfassend eine erste Messung mechanischer Schwingungen mittels eines Sensors (4) an einer Stelle eines Bauteils des Pumpenaggregats oder eines mechanisch mit diesem in Verbindung stehenden Bauteils und eine Auswertung eines Messsignals des Sensors (4) in einer Auswerteelektronik zur Bestimmung eines Vibrationswertes, wobei die Statorspulen (2, 22, 23) unabhängig von einander und asymmetrisch relativ zueinander in Abhängigkeit des Vibrationswertes gemäß einem vorbestimmten ersten Bestromungsprofil bestromt werden. Weiterhin betrifft die Erfindung ein Pumpenaggregat, das zur Durchführung des Verfahrens eingerichtet ist.

## Beschreibung

Die Erfindung betrifft ein Verfahren zur Reduzierung der Geräuschemission eines Pumpenaggregats mit einer Pumpe und einem diese antreibenden Elektromotor mit einzeln bestrombaren Statorspulen umfassend eine erste Messung mechanischer Schwingungen mittels eines Sensors an einer Stelle eines Bauteils des Pumpenaggregats oder eines mechanisch mit diesem in Verbindung stehenden Bauteils und einer Auswertung eines Messsignals des Sensors in einer Auswerteelektronik zur Bestimmung eines Vibrationswertes. Weiterhin betrifft die Erfindung ein elektromotorisch betriebenes Pumpenaggregat, das zur Durchführung des erfindungsgemäßen Verfahrens eingerichtet ist.

Bei Pumpen, die mittels eines Elektromotors angetrieben werden, kann es im Betrieb des Elektromotors zu Geräuschemissionen kommen, die durch mechanische, elektrische oder magnetische Unsymmetrien des Elektromotors bedingt sind. Mechanische Unsymmetrien können beispielsweise aus einer Unwucht des Rotors, einer nicht idealen konzentrischen Lage zwischen Rotor und Stator aufgrund von Bauteiltoleranzen oder aufgrund von betriebsbedingten Verschleißerscheinungen der Lager resultieren. Wegen der Toleranzen der einzelnen Spulen, insbesondere bei deren Anordnung innerhalb des Stators und aufgrund geringfügig unterschiedlicher Spulenwicklungslängen, entstehen elektromagnetische Asymmetrien des Statorfeldes. Weiterhin können bei der Verwendung von Rotoren mit Permanentmagneten magnetische Asymmetrien des Rotorfeldes entstehen, die durch ein unsymmetrisches magnetisches Feld der hergestellten Permanentmagnete bedingt sind.

Die durch diese mechanischen, magnetischen und/oder elektromagnetischen Asymmetrien erzeugten Kräfte wirken in axialer, radialer und ferner auch in tangentialer Richtung des Rotors und regen das Pumpenaggregat, d.h. den Elektromotor respektive die mit ihm mechanisch in Verbindung stehende Pumpe zu Eigenschwingungen bzw. mechanischen Vibrationen an. Diese Schwingungen erzeugen wiederum eine Schallabstrahlung in Form von Körper- Luftschall sowie Flüssigkeitsschall, der auf das geförderte hydraulische Medium übertragen wird und sich dadurch innerhalb des gesamten hydraulischen Systems verbreitet, in dem die elektromotorisch betriebene Pumpe integriert ist. Beide Schallarten werden als akustische Wellen von Personen in der näheren Umgebung der Pumpe respektive des hydraulischen Systems wahrgenommen und bilden störende Geräusche. Erreichen die Vibrationen Resonanzfrequenzen der mechanischen Konstruktion des Pumpenaggregates, können sogar Schäden an einzelnen Komponenten des Elektromotors oder der Pumpe entstehen.

Zur Verringerung oder gar Vermeidung derartiger Vibrationen ist es bekannt, den mechanischen Aufbau des Pumpenaggregates durch konstruktive Maßnahmen zu optimieren. Hierzu dienen insbesondere mechanische Schwingungsdämpfer. Diese bedingen jedoch einen vergleichsweise komplexen Aufbau des Pumpenaggregates und erhöhen dessen Herstellungsaufwand erheblich.

Es ist daher Aufgabe der Erfindung, ein Verfahren bereits zu stellen, welches die Geräuschemission bei elektromotorisch betriebenen Pumpen auf besonders einfache und preisgünstige Weise minimiert und sogar eliminiert und gleichzeitig Verschleißerscheinungen an mechanischen Bauteilen des Elektromotors und/oder der Pumpe reduziert.

Diese Aufgabe wird durch das Verfahren mit den Merkmalen gemäß Anspruch 1 sowie durch die elektromotorisch betriebene Pumpe mit den Merkmalen des Anspruchs 15 gelöst.

Erfindungsgemäß ist dabei vorgesehen, dass die Statorspulen des Elektromotors unabhängig voneinander und asymmetrisch relativ zueinander in Abhängigkeit eines von einem Sensor an einer Stelle des Bauteils des Pumpenaggregats oder eines mechanisch mit diesem in Verbindung stehenden Bauteils gemessenen Messsignals und eines daraus in einer Auswerteelektronik bestimmten Vibrationswertes gemäß einem vorbestimmten ersten Bestromungsprofils bestromt werden. Die voneinander unabhängige und asymmetrische Bestromung der Statorspulen relativ zueinander gemäß einem bestimmten Bestromungsprofil in Abhängigkeit eines bestimmten Vibrationswertes bewirkt eine gezielte Einflussnahme auf das magnetische Statorfeld, so dass unsymmetrische Kraftkomponenten des Statorfeldes und/oder des Rotorfeldes kompensiert werden können. Die Kompensation der unsymmetrischen Kraftkomponenten bewirkt dabei wiederum eine Reduzierung der mechanischen Vibration des Rotors, wodurch folgemäßig der Verschleiß der Lager und der übrigen Bauteile, insbesondere mechanische und elektrische Verbindungen erheblich verringert wird. Durch diese Verringerung der mechanischen Vibrationen des Rotors verringert sich ebenfalls die Geräuschemmission der elektromotorisch betriebenen Pumpe, da lediglich die verringerten Vibrationen von dem Rotor über die Lager an den Elektromotor respektive den mit dem Lager in Verbindung stehenden Bauteilen übertragen werden.

Das erfindungsgemäße Verfahren kann elektronisch implementiert, d.h. von einer den Elektromotor steuernden Steuerelektronik, insbesondere von einem Mikrocontroller derselben ausgeführt werden und ist damit besonders kostengünstig und kostenneutral realisierbar. Es ist kein Eingriff in die Hardware oder Mechanik des Pumpenaggregats notwendig.

Vorzugsweise können die Statorspulen gemäß dem ersten Bestromungsprofil dann bestromt werden, wenn der Vibrationswert einen vorgegebenen Grenzwert überschreitet. Hierdurch wird erreicht, dass das erfindungsgemäße Verfahren nur dann aktiviert wird, wenn die Geräuschemmission der Pumpe einen bestimmten Schallpegel erreicht hat, der als besonders störend empfunden wird. Im Übrigen kann die Pumpe unterhalb des Vibrationswert respektive unterhalb des dem Vibrationswert zugeordneten Schallpegels in ihrem konventionellen Betriebsmodus betrieben werden, in dem die Statorspulen symmetrisch bestromt werden, d. h. sich gegenüberliegende Statorspulen stets gleichzeitig, bei einem beispielhaften elektronisch kommutierten Motor mit einer pulsweitenmodulierten Spannung und benachbarte Spulen entsprechend der Polpaarzahl 2p des Elektromotors mit einer um einen Winkel von 360°/ 2p elektrisch phasenverschobenen pulsweitenmmodulierten Spannung beaufschlagt werden.

Vorzugsweise kann das erste Bestromungsprofil derart ausgebildet sein, dass in zumindest einer Statorspule ein Erregerstrom eingeprägt wird, der relativ zu dem Erregerstrom der übrigen Statorspulen zu dem entsprechenden Zeitpunkt der Erregung der anderen Statorspulen innerhalb eines Erregungszyklus um einen vorbestimmten Wert erhöht ist. Als Erregungszyklus wird dabei ein Umlauf des Statorfeldes verstanden, d. h. der zeitliche Abstand zwischen einem ersten Zeitpunkt, in dem in einer bestimmten Spule ein bestimmter Stromwert vorliegt, bis zu einem zweiten Zeitpunkt, zu dem dieser Stromwert in der Spule erneut erreicht wird. Durch die Einprägung eines Erregerstroms in einer Statorspule oder mehreren Statorspulen, der im Vergleich zu den Erregerströmen der übrigen Statorspulen zu den entsprechenden Zeitpunkten ihrer jeweiligen Erregung innerhalb eines Erregungszyklus um einen vorbestimmten Wert erhöht ist, wird erreicht, dass das Statormagnetfeld im Bereich der zumindest einen Statorspule vergrößert, d. h. seine Amplitude am Ort dieser Statorspule erhöht ist. Der Kraftvektor des durch die magnetische Erregung sämtlicher Statorspulen resultierenden Gesamtstatorfeldes kann dadurch im Bereich der zumindest einen Spule vergrößert werden.

Die Erhöhung des in zumindest eine Statorspule eingeprägten Erregerstroms kann in nur einem oder mehreren aufeinanderfolgenden oder abwechselnden Erregungszyklen erfolgen.

Die Erhöhung des in die zumindest eine Statorspule eingeprägten Erregerstroms kann auf unterschiedliche Weise erfolgen. Beispielsweise kann die Statorspule mit einer höheren Spannung relativ zu der Spannung beaufschlagt werden, mit der die übrigen Statorspulen innerhalb eines Erregungszyklus beaufschlagt werden, so dass der Erregerstrom in der Spule schneller ansteigt und damit nach einer bestimmten Bestromungsdauer einen höheren Wert erreicht hat als bei Bestromung mit einer niedrigeren Spannung für dieselbe Dauer.

Alternativ können alle Statorspulen mit einer Spannung derselben Höhe beaufschlagt werden, wobei die zumindest eine Statorspule für ein längeres Zeitintervall relativ zu dem entsprechenden Zeitintervall bei der Erregung der übrigen Statorspulen innerhalb eines Erregungszyklus mit Spannung beaufschlagt wird. Ein derartiges Verfahren kann insbesondere bei Elektromotoren verwendet werden, die über eine Pulsweitenmodulation aus einem Spannungszwischenkreis gespeist werden, wobei in diesem Fall die Pulsweiten des Modulationssignals und damit der an die Spule angelegten Spannung erfindungsgemäß vergrößert werden.

Alternativ oder in Kombination mit der Erhöhung des in zumindest einer Statorspule eingeprägten Erregerstroms kann in dieser Statorspule bzw. in zumindest einer anderen Statorspule ein Erregerstrom eingeprägt werden, der relativ zu dem Erregerstrom der übrigen Statorspulen zu dem entsprechenden Zeitpunkt ihrer jeweiligen Erregung innerhalb eines Erregungszyklus um einen vorbestimmten Wert reduziert ist. Dies hat entsprechend zur Folge, dass das Statorfeld im Bereich dieser Statorspule geschwächt wird, so dass der magnetische Kraftvektor des durch die Erregung sämtlicher Statorspulen erzeugten Statorgesamtfeldes im Bereich der Statorspule mit dem geringeren eingeprägten Erregerstrom reduziert ist.

Auch die Verringerung des in einer bestimmten Statorspule eingeprägten Erregerstroms kann auf unterschiedliche Art und Weise erfolgen. Beispielsweise kann die Statorspule mit einer geringeren Spannung relativ zu der Spannung beaufschlagt werden, mit der die übrigen Statorspulen innerhalb eines Erregungszyklus beaufschlagt werden. Alternativ können die übrigen Statorspulen mit derselben Spannung beaufschlagt werden, wobei die zumindest eine Statorspule für ein kürzeres Zeitintervall relativ zu dem entsprechenden Zeitintervall bei der Erregung der übrigen Statorspulen mit Spannung innerhalb eines Erregungszyklus beaufschlagt wird. Auch diese beiden Verfahren bieten sich insbesondere bei Elektromotoren an, die aus einem Spannungszwischenkreis mittels Pulsweitenmodulation gespeist werden, wobei in diesem Fall die Pulsweiten des Modulationssignals und damit der an die Spule angelegten Spannung erfindungsgemäß verringert werden.

Alternativ oder in Kombination mit der Verringerung oder Erhöhung des in eine Statorspule eingeprägten Erregerstroms kann das erste Bestromungsprofil auch derart sein, dass in diese Statorspule oder zumindest eine andere Statorspule ein Strom eingeprägt wird, der sich in seiner Form von den in übrigen Statorspulen eingeprägten Strömen unterscheidet. Dies kann ebenfalls durch die Wahl einer geeigneten Pulsweitenmodulation erfolgen. So kann beispielsweise in den übrigen Statorspulen ein Erregerstrom eingeprägt werden, der standardgemäß im Wesentlichen sinusförmig ist, wohingegen der in der zumindest einen Statorwicklung eingeprägte Erregerstrom eine im Wesentlichen trapezoidale Form aufweist. Auch ein derartiges Bestromungsprofil hat zur Folge, dass das Statorfeld im Bereich der zumindest einen Statorspule im Vergleich zu den übrigen Statorspulen entsprechend anders bestromten Statorspule in deren Bereich verändert wird.

Alternativ oder in Kombination zu den vorgenannten Verfahren kann auch vorgesehen werden, dass die Erregung der zumindest einen Spule mit einem Erregerstrom relativ bezogen auf ihren normalen Erregungszeitpunkt innerhalb eines Erregungszyklus früher oder später erfolgt, so dass die Phase des Erregerstroms geringfügig vorgezogen oder verzögert wird. Auf diese Weise wird im Falle einer vorgezogenen Erregung erreicht, dass der innerhalb der Motorbohrung im Normalbetriebsfall innerhalb eines Zyklus mit gleicher Geschwindigkeit umlaufende Kraftvektor des Statorgesamtfeldes vor dem Erreichen der vorzeitig erregten Statorspule schneller läuft und hinter dieser Statorspule langsamer läuft, sofern die Erregungsdauer der Statorspule identisch bleibt. Weiterhin kann im Falle einer verspäteten Erregung der Statorspule erreicht werden, dass der Kraftvektor des Statorgesamtfeldes vor dem Erreichen der Statorspule langsamer läuft und nach dem Passieren der Statorspule entsprechend beschleunigt wird.

In einer vorteilhaften Weiterbildung der Erfindung kann vorgesehen sein, dass eine zweite Messung der mechanischen Schwingungen zur Bestimmung eines zweiten Vibrationswertes erfolgt und von der Auswerteelektronik ein Vergleich zwischen dem ersten und zweiten Vibrationswert durchgeführt wird, wobei die Statorspulen gemäß einem zweiten Bestromungsprofil bestromt werden, wenn der zweite Vibrationswert höher als der erste Vibrationswert ist. Auf diese Weise kann das erfindungsgemäße Verfahren iterativ nach dem "Trial and Error" - Prinzip eingesetzt werden. Demgemäß kann eine Bestromungsänderung nach Überschreiten eines vorbestimmten Vibrationswertes gemäß einem ersten Bestromungsprofil wie zuvor beschrieben für einen Zyklus oder mehrere Zyklen erfolgen, wobei danach eine erneute Messung der Vibrationen erfolgt, um festzustellen, ob die Bestromungsänderung zu einer Reduzierung der Vibrationen geführt hat. Ist dies nicht der Fall, so kann das erste Bestromungsprofil durch ein zweites Bestromungsprofil ersetzt werden, welches seinerseits zu einer Reduzierung der Vibrationen führen kann. Weiterhin kann sich auch an die Bestromungsänderung gemäß zweiten Bestromungsprofil eine Vibrationsmessung anschließen, um festzustellen, ob das zweite Bestromungsprofil eine Vibrationsreduzierung herbeigeführt hat, Ist dies ebenfalls nicht der Fall, kann ein weiteres Bestromungsprofil angewendet werden. Diese Vorgehensweise kann erfindungsgemäß solange erfolgen, bis ein zur Vibrationsreduzierung führendes Bestromungsprofil gefunden worden ist.

Vorzugsweise können auch nacheinander unterschiedliche Bestromungsprofile einer vorbestimmten Gruppe angewendet werden und nach jeder Änderung des Bestromungsprofils eine Messung der mechanischen Schwingungen erfolgen, wobei nach der Anwendung der unterschiedlichen Bestromungsprofile der Gruppe ermittelt wird, bei welchem Bestromungsprofil die geringsten Schwingungen vorgelegen haben und wobei dieses Bestromungsprofil für den Betrieb der Pumpe gewählt wird. Dieses Verfahren kann insbesondere für die Inbetriebnahme einer Pumpe verwendet werden. Der die Pumpe antreibende Elektromotor kann dabei durchaus mechanische, magnetische oder elektromagnetische Asymmetrien aufweisen, die in Kauf genommen werden können, da die Asymmetrien im Betrieb der Pumpe durch ein geeignetes Bestromungsprofil der Steuerungselektronik kompensiert werden können. Der Elektromotor kann dabei in seiner Herstellung preisgünstiger gefertigt werden, da größere Toleranzen beispielswies bezüglich der Unwucht des Rotors, Anordnung und Wicklungslänge der Statorspulen akzeptabel sind. Erfindungsgemäß wird dann dasjenige Bestromungsprofil gesucht, welches die durch diese Asymmetrien erzeugten Vibrationen des Elektromotors auf ein Minimum reduziert, wobei die Pumpe anschließend für ihre gesamte Betriebslaufzeit mit diesem Bestromungsprofil betrieben wird. Zusätzlich kann jedoch zu einem späteren Zeitpunkt, d. h. wenn die Vibrationen an dem Elektromotor respektive der damit verbundenen Pumpe im Betrieb beispielsweise verschleißbedingt wieder zunehmen, das erfindungsgemäße Verfahren zur Geräuschminimierung erneut angewendet werden, wobei das bei der Inbetriebnahme der Pumpe gefundene Bestromungsprofil durch das Bestromungsprofil zur Verringerung der im Betrieb auftretenden Vibrationen ergänzt oder ersetzt werden kann.

Weiterhin kann vorgesehen werden, dass bei dem erfindungsgemäßen Verfahren die Auswerteelektronik bei dem Vergleich der Vibrationswerte miteinander einen Differenzwert oder ein Verhältnis bildet. Dieser Differenzwert oder das Verhältnis kann dabei Grundlage für die Beurteilung sein, ob ein anderes Bestromungsprofil gewählt bzw. welches Bestromungsprofil angewendet werden sollte.

In einer vorteilhaften Weiterbildung der Erfindung kann zumindest ein weiterer Sensor zu Messung der mechanischen Schwingungen an einem Bauteil der Pumpe oder eines mechanisch mit der Pumpe in Verbindung stehenden Bauteils vorgesehen werden, wobei die Auswerteeinheit ein Vibrationsprofil zwischen den Sensoren ermitteln kann und die Statorspulen gemäß dem ersten Bestromungsprofil bestromt werden, wenn das Vibrationsprofil an zumindest einer Stelle einen vorgegebenen Grenzwert überschreitet. Durch die Verwendung mehrerer Sensoren, die vorzugsweise an verschiedenen Orten des Statorumfangs angeordnet sein können, kann ein Vibrationsgradient zwischen den Sensoren ermittelt werden. Erfasst dabei ein erster Sensor an einer ersten Position im Stator einen höheren Vibrationswert als ein zweiter Sensor an einem zweiten Ort am Unfang des Stators können Rückschlüsse auf die Form der Unsymmetrie des Statorfeldes gezogen werden. In diesem Falle ist das Statorfeld im Bereich des ersten Sensors stärker ausgebildet als im Bereich des zweiten Vibrationssensors, so dass auf der Grundlage dieser Information gezielt ein bestimmtes Bestromungsprofil, beispielsweise eine verstärkte Bestromung der Spulen auf der dem ersten Sensor gegenüberliegenden Seite des Stators gewählt werden kann. Die Vibrationen und damit die Geräuschemissionen können dadurch noch wirkungsvoller minimiert werden. Eine besonders genaue Identifizierung der Statorfeldunsymmetrie wird ferner durch die Verwendung mehrerer Sensoren erreicht. Insbesondere kann durch die Verwendung mehrerer Sensoren festgestellt werden, ob und wohin sich die Vibrationen nach der Anwendung eines bestimmten Bestromungsprofils verlagert haben, so dass auf der Grundlage dieser Information beurteilt werden kann, wie das Statorfeld zu beeinflussen ist, um die Vibrationen zu dämpfen.

Zur Erfassung der Schwingungen kann ein Beschleunigungssensor oder ein Dehnungsmessstreifen verwendet werden. Diese sind vergleichsweise preiswert und können leicht in den Stator des Elektromotors integriert werden.

Vorzugsweise können die Schwingungen am Gehäuse der Pumpe gemessen und das Bestromungsprofil auf der Grundlage dieser Messung geändert werden. Da insbesondere der vom Pumpengehäuse abgegebene Körperschall von unmittelbar in der Nähe befindlicher Personen als störend empfunden wird, ist das Gehäuse der Pumpe als Geräuschemissionsquelle und damit als Ort der Vibrationserfassung bevorzugt zu wählen.

Erfindungsgemäß wird weiterhin ein Pumpenaggregat mit einer Pumpe und einem diese antreibenden Elektromotor und mit zumindest einem Sensor zur Erfassung mechanischer Schwingungen an einer Stelle eines Bauteils des Pumpenaggregats oder eines mechanisch mit diesem in Verbindung stehenden Bauteils vorgeschlagen, wobei das Pumpenaggregat eine Auswerteelektronik zur Bestimmung eines Vibrationswertes und eine Steuereinheit zur Bestromung der Statorspulen des die Pumpe antreibenden Elektromotors unabhängig voneinander und asymmetrisch relativ zueinander in Abhängigkeit des Vibrationswertes gemäß einem vorbestimmten Bestromungsprofil aufweist, wobei die Pumpe zur Durchführung des erfindungsgemäßen Verfahrens eingerichtet ist.

Weitere Vorteile und Merkmale der Erfindung können der nachfolgenden Detailbeschreibung von Ausführungsbeispielen sowie den Figuren entnommen werden.

Es zeigen:
Figur 1: schematische Darstellung eines Stators eines Elektromotors mit asymmetrischem Statorfeld
Figur 2a: Darstellung eines asymmetrischen Statorfeldes mit unterschiedlichen Kraftvektoren von Statorfeld und Rotorfeld in Größe und Richtung der Vektoren.
Figur 2b: Kraftvektor des Statorfeldes invers zur Richtung des Kraftvektors des Rotorfeldes und unterschiedlicher Größe
Figur 2c: Richtung des Kraftvektors des Statorfeldes invers zur Richtung des Kraftvektors des Rotorfeldes und gleiche Größe der Kraftvektoren.

Beispielhaft wird für die Beschreibung der Funktionsweise des erfindungsgemäßen Verfahrens ein elektronisch kommutierter Motor 1 (EC-Motor) verwendet. Bei derartigen Motoren wird ein permanentmagnetischer Rotor 6 durch die Bestromung konzentrisch positionierter Spulen 2, 22, 23 in Rotation versetzt. Durch die zyklische Bestromung der Statorspulen 2, 22, 23 erzeugen diese innerhalb der Bohrung des EC-Motors 1 ein sich drehendes, den permanentmagnetischen Rotor durchsetzendes Statorfeld 5, welches mit dem Magnetfeld der Permanentmagnete des Rotors 6 interagiert, eine magnetische Kraft auf den Rotor 6 ausübt und diesen damit in Drehung versetzt.

Üblicherweise werden derartige EC-Motoren mit einer Pulsweitenmodulation betrieben, mittels derer der Elektromotor aus einem Spannungszwischenkreis gespeist wird. Zwei sich im Stator gegenüberliegende Spulen sind dabei üblicherweise in Reihe geschaltet, so dass sich in diesen Spulen derselbe Erregerstrom ausbildet. Dieser erzeugt ein magnetisches Statorfeld, welches im Bereich der einen Statorspule seinen Nordpol und im Bereich der zweiten Statorspule seinen Südpol ausbildet. Das Pulsweitenmodulationssignal, mit dem die anderen Spulen bestromt werden, ist um einen Winkel phasenverschoben, der sich aus dem Verhältnis von 360° zur Polpaarzahl 2p ergibt. Weist der EC-Motor beispielsweise eine Polpaarzahl 2p=3 auf, so ist die Phasenverschiebung des eingeprägten Stroms zweier benachbarter Spulen um 120° phasenverschoben. Bei entsprechender Bestromung aller Statorspulen dreht das Statorfeld daher in der Bohrung des Elektromotors.

Demgegenüber ist bei dem erfindungsgemäßen Motor 1 jedoch vorgesehen, dass die einzelnen Spulen 2, 22, 23 einzeln und damit unabhängig voneinander bestromt werden können. Die Spulen 2, 22, 23 des erfindungsgemäßen Elektromotors 1 sind dabei nicht miteinander verschaltet, zwei sich gegenüberliegende Spulen dabei insbesondere nicht in Reihe geschaltet. Die Bestromung der einzelnen Spulen erfolgt mittels einer Elektronik unabhängig voneinander.

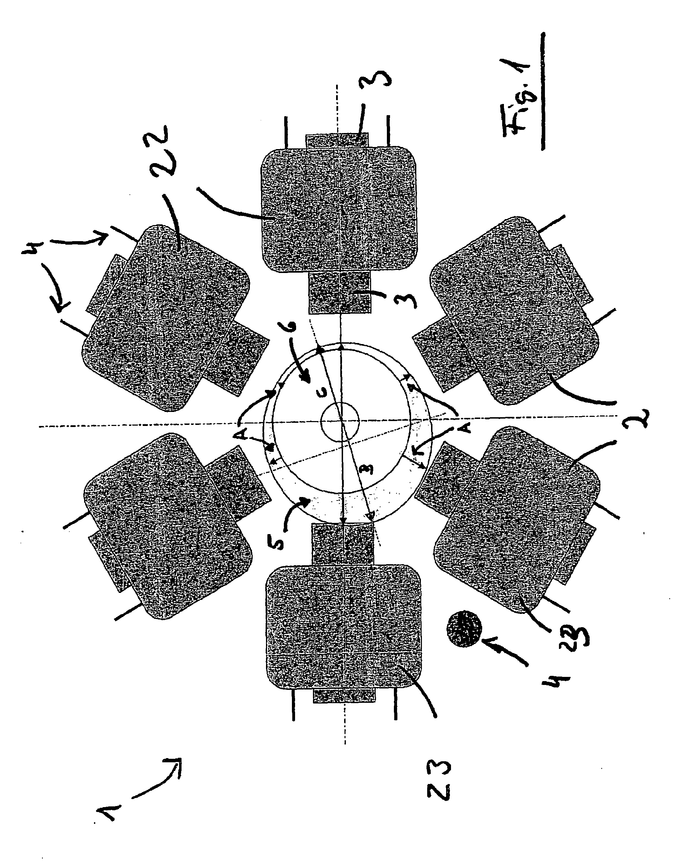

Figur 1 zeigt beispielhaft einen EC-Motor 1 mit einer Polpaarzahl 3 umfassend 6 Statorspulen 2 die auf vereinfacht dargestellten Statorzähnen 3 angeordnet sind. Die Statorspulen 2 weisen Wicklungsenden 4 auf, die zu einer nicht dargestellten pulsweitengesteuerten Leistungselektronik geführt sind, und über die die Statorspulen 2, 22, 23 unabhängig voneinander mit Spannung beaufschlagt werden können, d.h. bestromt werden können. Es ist ein Vibrationssensor 4 vorgesehen, der in Figur 1 lediglich beispielhaft zwischen zwei Statorspulen 23 im Stator angeordnet ist. Vorzugsweise kann dieser Vibrationssensor 4 am Elektromotorengehäuse oder am Pumpengehäuse angeordnet sein.

Figur 1 zeigt weiterhin ein unsymmetrisch ausgeprägtes Statorfeld 5 welches schematisch durch eine leicht elliptische Form dargestellt ist, wobei die das Statorfeld 5 bildende Ellipse in ihrem Mittelpunkt nicht mit der Rotorachse eines Rotors 6 konzentrisch ist. Die Pfeile A zeigen die zu den einzelnen Statorspulen gerichteten Kraftvektoren des Statorfeldes 5, die auf den Rotor 5 wirken, ihrer Größe nach. Dabei ist die auf den Rotor 6 von dem anteiligen Statorfeld der Spulen 22 ausgeübte Kraft erheblich geringer als die Kraft des anteiligen Statorfeldes, das von den Statorspulen 23 auf den Rotor 6 wirkt. Es ergibt sich damit, dass das Statorfeld im Bereich der Spulen 23 stärker ausgeprägt ist als im Bereich der Spulen 22. Der Kraftvektor des Statorgesamtfeldes wird in Figur 1 durch den Pfeil B dargestellt. Er ist etwa auf den Bereich zwischen den beiden Spulen 23 gerichtet und in seinem Betrag größer als der Kraftvektor des Rotors 6, der durch den Pfeil C in Figur 1 dargestellt ist.

Der Sensor 4 nimmt durch die Kräfte hervorgerufene Vibrationen, d.h. beispielsweise die Beschleunigung oder Geschwindigkeit der Bewegung des mechanischen Bauteils auf, mit dem der Sensor 4 in Wirkverbindung steht. Das Signal des Sensors 4 wird mittels einer nicht dargestellten Elektronik ausgewertet. Durch Veränderung der Bestromung einer oder mehrerer Spulen 2, 22, 23 wird der resultierende Kraftvektor B in seiner Größe und/oder seiner Richtung verändert. Dies führt zu einer veränderten Signalgröße am Sensor 4. Die Veränderung der Bestromung kann durch eine Software-Routine erfolgen, die in der Elektronik vorgesehen ist.

Die Elektronik bewertet nach Änderung der Bestromung die Veränderung der Signalgröße am Sensor 4. Sofern der aktuelle Messwert zum vorherigen Messwert größer ist, hat die Bestromungsänderung nicht das gewünschte Ziel erreicht, so dass die Bestromung erneut einer oder mehrerer anderer Spulen angepasst werden muss. Dies erfolgt durch Anwendung eines zweiten Bestromungsprofils. Ist der aktuelle Messwert zum vorherigen Messwert dagegen kleiner, wurden die Vibrationen durch die Änderung des Bestromungsprofils wirkungsvoll minimiert und damit ebenfalls eine Reduzierung der Geräuschemission der Pumpe herbeigeführt. Zusätzlich wird die Größe und die Art der Bestromung der einen oder mehreren Spulen 2, 22, 23 soweit korrigiert, dass die Größe des Messwertes bzw. die Größe des resultierenden Kraftvektors B minimal wird. Die Anpassung der Bestromung der Spulen 2, 22, 23 kann unter anderem in seiner Form, beispielsweise sinusförmig, trapezförmig oder mittels Blockansteuerung, in der Dauer, oder dem Zeitpunkt der Bestromung der Spulen um den jeweiligen Nominalwert herum entsprechend korrigiert werden.

Zur Vermeidung einer Verschlechterung des Motorwirkungsgrades ist vorgesehen, dass die erfindungsgemäße Bestromungsänderung zur Geräuschreduzierung nur bei kritischen Drehzahlen bzw. Drehzahlbereichen durchgeführt wird. Im unkritischen Betrieb kann der Motor dagegen ohne das erfindungsgemäße Verfahren mit seinem hohen Wirkungsgrad betrieben werden.

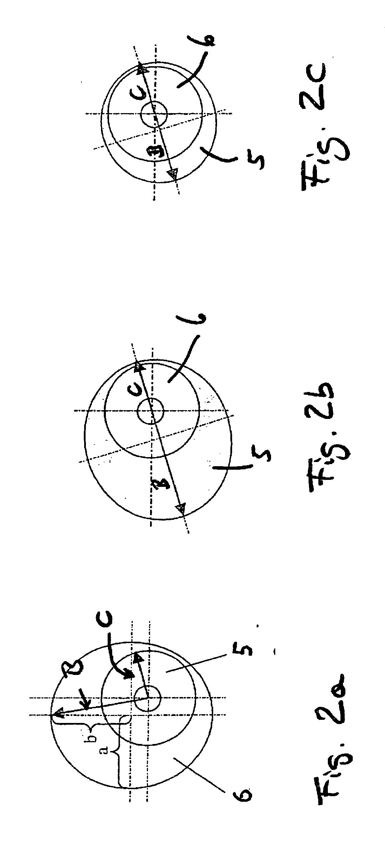

Figur 2a zeigt eine schematische Darstellung eines asymmetrischen Statorfeldes 5 vor der Durchführung des erfindungsgemäßen Verfahrens. Das Statorfeld 5 ist dabei erneut elliptisch ausgeprägt wobei die Halbachsen der Ellipse durch die Buchstaben a und b charakterisiert ist. Der Mittelpunkt der Ellipse liegt nicht auf der Rotorachse des Rotors 6. Der auf den Rotor 6 wirkende Kraftvektor B ist in Betrag und Richtung von dem Kraftvektor C des Rotorfeldes verschieden.

Figur 2 b zeigt die Verhältnisse von Statorfeld 5 in Bezug auf den Rotor 6 sowie den Kraftvektor B des Statorfeldes und des Kraftvektor C des Rotorfeldes nach einem ersten Iterationsschritt des erfindungsgemäßen Verfahrens. Das Statorfeld 5 ist dabei in der Form unverändert asymmetrisch, jedoch ist die Richtung des Statorfeldes bzw. die Richtung des Kraftvektors B des Statorfeldes durch eine Bestromungsänderung bzw. durch ein geeignetes Bestromungsprofil in der Richtung bereits derart geändert, dass die Richtung des Kraftvektors B invers zur Richtung des Kraftvektors C des Rotorfeldes ist.

Figur 2c zeigt die Verhältnisse von Statorfeld 5 in Bezug auf den Rotor 6 sowie den Kraftvektor B des Statorfeldes 5 und Kraftvektor C des Rotors 6 nach einem zweiten Iterationsschritt des erfindungsgemäßen Verfahrens. In diesem Betriebszustand des Elektromotors 1 ist das Statorfeld 5 lediglich noch geringfügig asymmetrisch, wobei die Halbachsen a und b der elliptischen Grundform des Statorfeldes 5 durch die Bestromungsänderung der Spulen 2, 22, 23 des Stators optimiert sind. Weiterhin wurde erreicht, dass die Größe des Kraftvektors B des Statorfeldes 5 in etwa gleich der Größe des Kraftvektors C des Rotors 6 ausgebildet ist und dies unter Beibehaltung des bereits im ersten Iterationsschritt erreichten Ziels, dass die Richtung des Kraftvektors B des Statorfeldes 5 invers zur Richtung des Kraftvektors C des Rotors 6 ist. Die Figuren 2a bis 2c stellen die jeweiligen Kraftvektorverhältnisse zu gleichen Zeitpunkten innerhalb verschiedener Erregungszyklen dar, zwischen denen jeweils Bestromungsänderungen der Spulen 2, 22, 23 des Elektromotors 1 vorgenommen worden sind.

Durch die gezielte Richtungsanpassung der Kraftvektoren sowie deren Größenanpassung nach einem ersten und zweiten Iterationsschritt gemäß Figuren 2b und 2c sind durch die Auffindung eines geeigneten Bestromungsprofils die konstruktions- oder verschleißbedingten Unsymmetrien des Elektromotors 1 auf ein Minimum reduziert, so dass etwaige Vibrationen des Elektromotors in ihrer Entstehung weitestgehend gehemmt bzw. eliminiert sind und damit ebenfalls die Geräuschemission des Elektromotors respektive der mit ihm verbundenen Pumpe auf ein Minimum reduziert bzw. eliminiert ist.

## Patentansprüche

1. Verfahren zur Reduzierung der Geräuschemission eines Pumpenaggregats mit einer Pumpe und einem diese antreibenden Elektromotor (1) mit einzeln bestrombaren Statorspulen (2, 22, 23) umfassend eine erste Messung mechanischer Schwingungen mittels eines Sensors (4) an einer Stelle eines Bauteils des Pumpenaggregats oder eines mechanisch mit diesem in Verbindung stehenden Bauteils und eine Auswertung eines Messsignals des Sensors (4) in einer Auswerteelektronik zur Bestimmung eines Vibrationswertes, **dadurch gekennzeichnet, dass** die Statorspulen (2, 22, 23) unabhängig von einander und asymmetrisch relativ zueinander in Abhängigkeit des Vibrationswertes gemäß einem vorbestimmten ersten Bestromungsprofil bestromt werden.

2. Verfahren nach Anspruch 1, **dadurch gekennzeichnet, dass** die Statorspulen (2, 22, 23) gemäß dem ersten Bestromungsprofil bestromt werden, wenn der Vibrationswert einen vorgegebenen Grenzwert überschreitet.

3. Verfahren nach Anspruch 2, **dadurch gekennzeichnet, dass** in zumindest einer Statorspule (22) ein Erregerstrom eingeprägt wird, der relativ zu dem Erregerstrom der übrigen Statorspulen (2, 23) zu dem entsprechenden Zeitpunkt ihrer Erregung innerhalb eines Erregungszyklus um einen vorbestimmten Wert erhöht ist.

4. Verfahren nach Anspruch 1, 2 oder 3, **dadurch gekennzeichnet, dass** die Statorspule (22) mit einer höheren Spannung relativ zu der Spannung, mit der die übrigen Statorspulen (2, 23) innerhalb eines Erregungszyklus beaufschlagt werden, beaufschlagt wird oder, dass alle Statorspulen (2, 22, 23) mit einer Spannung derselben Höhe beaufschlagt werden, wobei die zumindest eine Statorspule (22) für ein längeres Zeitintervall relativ zu dem entsprechenden Zeitintervall bei der Erregung der übrigen Statorspulen (2, 23) innerhalb eines Erregungszyklus mit Spannung beaufschlagt wird.

5. Verfahren nach einem der vorhergehenden Ansprüche, **dadurch gekennzeichnet, dass** in zumindest einer Statorspule (23) ein Erregerstrom eingeprägt wird, der relativ zu dem Erregerstrom der übrigen Statorspulen (2, 22) zu dem entsprechenden Zeitpunkt ihrer Erregung innerhalb eines Erregungszyklus um einen vorbestimmten Wert reduziert ist.

6. Verfahren nach einem der vorhergehenden Ansprüche, **dadurch gekennzeichnet, dass** die Statorspule (23) mit einer geringeren Spannung relativ zu der Spannung, mit der die übrigen Statorspulen (2, 22) innerhalb eines Erregungszyklus beaufschlagt werden, beaufschlagt wird oder, dass alle Statorspulen (2, 22, 23) mit derselben Spannung beaufschlagt werden, wobei die zumindest eine Statorspule (23) für ein kürzeres Zeitintervall relativ zu dem entsprechenden Zeitintervall bei der Erregung der übrigen Statorspulen (2, 22) mit Spannung innerhalb eines Erregungszyklus beaufschlagt wird.

7. Verfahren nach einem der vorhergehenden Ansprüche, **dadurch gekennzeichnet, dass** in zumindest einer Statorspule (2) ein Strom eingeprägt wird, der sich in seiner Form von den in den übrigen Statorwicklungen (22, 23) eingeprägten Strömen unterscheidet.

8. Verfahren nach einem der vorhergehenden Ansprüche, **dadurch gekennzeichnet, dass** die Erregung zumindest einer Statorspule (2) relativ zu ihrem normalen Erregungszeitpunkt innerhalb eines Erregungszyklus früher oder später erfolgt.

9. Verfahren nach einem der vorhergehenden Ansprüche, **dadurch gekennzeichnet, dass** eine zweite Messung der mechanischen Schwingungen zur Bestimmung eines zweiten Vibrationswertes erfolgt und von der Auswerteelektronik ein Vergleich zwischen den Vibrationswerten durchgeführt wird, wobei die Statorspulen (2, 22, 23) gemäß einem zweiten Bestromungsprofil bestromt werden, wenn sich der Vibrationswert erhöht hat.

10. Verfahren nach einem der vorhergehenden Ansprüche, **dadurch gekennzeichnet, dass** nacheinander unterschiedliche Bestromungsprofile angewendet werden und nach jeder Änderung des Bestromungsprofils eine Messung der mechanischen Schwingungen erfolgt, wobei ermittelt wird, bei welchem Bestromungsprofil die geringsten Schwingungen vorliegen und dieses Bestromungsprofil für den Betrieb des Pumpenaggregats gewählt wird.

11. Verfahren nach einem der vorhergehenden Ansprüche, **dadurch gekennzeichnet, dass** die Auswerteelektronik bei dem Vergleich der Vibrationswerte einen Differenzwert oder ein Verhältnis bildet.

12. Verfahren nach einem der vorhergehenden Ansprüche, **dadurch gekennzeichnet, dass** zumindest ein weiterer Sensor zur Messung der mechanischen Schwingungen an einem Bauteil des Pumpenaggregats oder eines damit mechanisch in Verbindung stehenden Bauteils vorgesehen wird, wobei die Auswerteeinheit ein Vibrationsprofil ermittelt und die Statorspulen (2, 22, 23) gemäß dem ersten Bestromungsprofil bestromt werden, wenn das Vibrationsprofil an zumindest einer Stelle einen vorgegebenen Grenzwert überschreitet.

13. Verfahren nach einem der vorhergehenden Ansprüche, **dadurch gekennzeichnet, dass** zur Erfassung der Schwingungen ein Beschleunigungssensor oder Dehnungsmessstreifen verwendet wird.

14. Verfahren nach einem der vorhergehenden Ansprüche, **dadurch gekennzeichnet, dass** die Schwingungen am Gehäuse der Pumpe gemessen werden.

15. Pumpenaggregat mit einer Pumpe und einem diese antreibenden Elektromotor (1) und mit zumindest einem Sensor (4) zur Erfassung mechanischer Schwingungen an einer Stelle eines Bauteils des Pumpenaggregats oder eines damit mechanisch in Verbindung stehenden Bauteils, mit einer Auswerteelektronik zur Bestimmung eines Vibrationswertes und mit einer Steuereinheit zur Bestromung der Statorspulen (2, 22, 23) des die Pumpe antreibenden Elektromotors (1) unabhängig von einander und asymmetrisch relativ zueinander in Abhängigkeit des Vibrationswertes gemäß einem vorbestimmten Bestromungsprofil, **dadurch gekennzeichnet, dass** das Pumpenaggregat zur Durchführung des Verfahrens nach einem der Ansprüche 1 bis 14 eingerichtet ist.
